# EUROPEAN PATENT SPECIFICATION

(11) **EP 1 478 594 B1**
(45) Date of publication and mention of the grant of the patent: **10.08.2011**
(21) Application number: 03712663.8
(22) Date of filing: 28.02.2003
(51) Int. Cl.: C01B 21/064, B03D 1/00

(54) **METHOD FOR PRODUCING CUBIC BORON NITRIDE**
VERFAHREN ZUR HERSTELLUNG VON KUBISCHEM BORNITRID
PROCEDE DE PRODUCTION DE NITRURE DE BORE CUBIQUE

(30) Priority: 28.02.2002 JP 2002054374; 05.03.2002 US 361326 P
(43) Date of publication of application: 24.11.2004
(73) Proprietor: Showa Denko K.K., Minato-ku, Tokyo 105-8518 (JP)
(72) Inventor: OHTSUBO, Hirohiko, Shiojiri-shi, Nagano 399-6461 (JP)
(74) Representative: Strehl Schübel-Hopf & Partner
(86) International application number: PCT/JP2003/002364
(87) International publication number: WO 2003/072495

(56) References cited:
- DE-A1- 19 721 082
- GB-A- 1 061 598
- GB-A- 1 294 284
- JP-A- 9 000 910
- JP-A- 51 006 199
- US-A- 2 947 617
- US-A- 3 661 521
- US-A- 5 618 509
- US-B1- 6 248 303

## Description

### Technical Field

The present invention relates to a method for producing cubic boron nitride (cBN) by a high-pressure technique and, more particularly, to a method for separating and recovering cBN from composite lumps of cBN-containing material produced by a high-pressure technique.

This application is based on Japanese Patent Application No. 2002-54374.

### Background Art

Techniques for producing composite lumps containing cBN are disclosed in, for example, Japanese Examined Patent Application, First Publication No. Sho 58-84106 and US Patent No. 2,947,617 in which a mixture of hexagonal boron nitride (hBN) and a catalyst is placed under pressure and temperature conditions that thermodynamically favor the stable presence of cBN.

Specifically, powder of hBN is mixed with a catalyst provided in the form of powder or lumps of an alkaline metal, an alkaline earth metal or a compound containing these elements. The resulting material is packed in a heater mainly made of graphite. The heater is then inserted in a capsule made of pyrophyllite. The material is then maintained under pressure and temperature conditions that thermodynamically favor the stable presence of cBN to produce composite lumps of cBN-containing material.

The cBN-containing composite lumps produced in this manner contain, aside from cBN, materials such as low-pressure phase boron nitride (i.e., remaining unreacted hBN, pBN, rBN, and recrystallized hBN), catalysts, graphite materials, and pyrophyllite. Thus, to produce cBN, cBN alone must be separated and recovered from the composite lumps.

Conventionally, the following method has been employed to separate and recover only cBN from the composite lumps.

The catalysts present in the composite lumps generally dissolve in water and thus can be separated by subjecting the crushed composite lumps to a process known as decantation. In this process, water is added to a mixture containing a substance of interest. After stirring, the solution is allowed to stand still to cause the substance to settle, and the supernatant is decanted. This process may be repeated more than one time.

The low-pressure phase boron nitride, pyrophyllite, and cBN contained in the composite lumps can be separated in a manner as described in, for example, Japanese Examined Patent Application, Second Publication No. Sho 49-27757. In this technique, composite lumps are crushed down to 5mm or smaller in size. Sodium hydroxide is added to the crushed material along with a small amount of water, and the mixture is heated at about 300°C to dissolve the low-pressure phase boron nitride in the sodium hydroxide solution.

The graphite material present in the composite lumps is separated and removed by dissolving the graphite in a mixture of sulfuric acid and nitric acid. Pyrophyllite, most of which in many cases exists as large chunks, may be removed manually by using tweezers or other tools.

As described above, the conventional technique for separating and recovering cBN from the composite lumps involves the use of large amounts of strongly acidic or strongly basic reagents in order to remove the low-pressure phase boron nitride, pyrophyllite, and graphite material and is therefore associated with considerable operational risks. The technique also requires significant amounts of labor and costly facilities to neutralize and properly process waste water. In particular, strongly basic reagents are used in substantial amounts and thus add to the operational risks and the amount of labor devoted to neutralizing the waste water. A further drawback is that the remaining low-pressure phase boron nitride in the composite lumps cannot be recycled because the low-pressure phase boron nitride is dissolved and discarded.

DE 19721082 A1 discloses a process for the production of cubic boron nitride in which hexagonal cubic boron nitride is converted to cubic boron nitride in the presence of a carbide and under conditions of a temperature of 1100°C or more and a pressure of 3.8 GPa or more.

US 6, 248,303 B1 discloses a process for the production of cubic boron nitride in which hexagonal cubic boron nitride is converted to cubic boron nitride in the presence of a catalyst and under conditions of a temperature of 1100°C or more and a pressure of 3.8 GPa or more.

### Disclosure of Invention

Through the course of extensive studies to solve the aforementioned problems, the present inventors have found that, by using the following methods of the present invention, the amount of strongly basic reagents used to separate and recover cBN from the composite lumps produced by the high-pressure process can be minimized and the operational risks as well as the amount of labor required in neutralizing waste water can be reduced, while the method maximizes the amount of the residual low-pressure phase boron nitride that can be recycled. The finding ultimately led the present inventors to complete the present invention, which principally concerns the following aspects.
(1) A method for producing cubic boron nitride, in which a mixture containing hexagonal boron nitride and a catalyst is maintained under a pressure in the range of 4 GPa to 6 GPa and a temperature in the range of 1400°C to 1600°C thereby forming composite lumps containing cubic boron nitride, which in turn are dissolved in an alkaline solution to recover cubic boron nitride, the method being characterized by including, prior to the dissolving step, a step of decreasing the ratio of low-pressure phase boron nitride to cubic boron nitride in the composite lumps by an ore flotation process down to 50% by mass or less.
(2) The method for producing cubic boron nitride according to (1) above, characterized in that the ratio of low-pressure phase boron nitride to cubic boron nitride in the composite lumps is reduced to 30% by mass or less.
(3) The method for producing cubic boron nitride according to (1) or (2) above, characterized in that, prior to the ore floatation process, the composite lumps are crushed down to an average particle size of 20 mm or less.
(4) The method for producing cubic boron nitride according to (1) or(2) above, characterized in that, prior to the ore floatation process, the composite lumps are crushed down to an average particle size of 5 mm or less.
(5) The method for producing cubic boron nitride according to any one of (1), (3) or (4) above, characterized in that the composite lumps are crushed and an ore floatation agent is added to the crushed product along with water, followed by stirring of the mixture and then the ore floatation process.
(6) The method for producing cubic boron nitride according to (5), characterized in that the water is hot water having a temperature from 50 to 110°C.
(7) The method for producing cubic boron nitride according to (5) or (6) above, characterized in that the ore floatation agent comprises at least one selected from kerosene, coal tar creosote, and sodium oleate, and at least one selected from pine oil, camphor, methylisobutyl carbinol (MIBC), conifer oil, cresylic acid, creosote oil, eucalyptus oil, and flotol oil.
(8) The method for producing cubic boron nitride according to (5) or (6) above, characterized in that, prior to the ore floatation step, the composite lumps are formed into a slurry with a solvent, to which an acid is added to adjust the pH to 1 or lower, and subsequently, the ore floatation agent is added to carry out the ore floatation process, the ore floatation agent comprising at least one selected from fatty acids, resin acids, and alkaline salts thereof, and at least one selected from pine oil, camphor, methylisobutyl carbinol (MIBC), conifer oil, cresylic acid, creosote oil, eucalyptus oil, and flotol oil.
(9) The method for producing cubic boron nitride according to (8) above, characterized in that water is used as a solvent for forming the composite lumps into the slurry.
(10) The method for producing cubic boron nitride according to (8) or (9) above, characterized in that hot water having a temperature from 50 to 110°C is used as a solvent for forming the composite lumps into the slurry.
(11) The method for producing cubic boron nitride according to any one of (8) to (10) above, characterized in that, subsequent to the addition of the acid to adjust the pH to 1 or lower, the slurry is allowed to stand causing the composite material to settle and the supernatant is removed, which is followed by another addition of acid to adjust the pH to 1 or lower and then by the ore floatation process.

### Brief Description of the Drawings

fig. 1 is a schematic diagram showing an ore floatation apparatus in accordance with the present invention.
Fig. 2 is a schematic diagram showing an ore floatation apparatus in accordance with the present invention with three independent ore floatation reservoirs.

### Best Mode for Carrying Out the Invention

The method for producing cBN in accordance with the present invention includes the steps of producing composite lumps of cBN-containing material by placing a mixture containing hBN and a catalyst under pressure and temperature conditions that thermodynamically favor the stable presence of cBN, and recovering cBN therefrom by dissolving the composite lumps in an alkaline solution or an alkaline melt The method is characterized by including, before the dissolving step, the step of decreasing the ratio of the low-pressure phase boron nitride to cBN in the composite lumps by an ore floatation process to 50% by mass or less.

Although hBN, the starting material in the method of the present invention, may be obtained commercially, it is preferable to use hBN containing less oxygen since oxide impurities such as boron oxide can slow down the conversion of hBN to cBN. To this end, an hBN powder containing 1% or less oxygen is preferably used. It is also preferable to use hBN having a particle size of 100µm or less since too large a particle size can reduce the reactivity of hBN toward the catalyst materials, resulting in a decreased conversion rate into cBN.

The catalyst for catalyzing the conversion of hBN to cBN may be any known catalyst used for this purpose, including alkali metals (e.g., Li), nitrides (e.g., Li₃N) and boronitrides thereof (Li₃BN₂); alkali earth metals (e.g., Ca, Mg, Sr, and Ba), nitrides (e.g., Ca₃N₂, Mg₃N₂, Sr₃N₂, and Ba₃N₂) and boronitrides thereof (e.g., Ca₃ B₂ N₄, Mg₃ B₂ N₄ , Sr₃ B₂ N₄, Ba₃ B₂ N); and compound boronitrides of alkali metals and alkali earth metals (e.g., LiCaBN₂ and LiBaBN₂). Though the catalyst may have any particle size, it preferably has a particle size of 150 mesh (100 µm) or less since too large a particle size may result in a reduced reactivity toward hBN.

Preferably, the catalytic material is blended with hBN at a proportion of 5 to 50 parts by mass with respect to 100 parts by mass of hBN.

While the catalytic material and hBN may be made to coexist by mixing powders of respective materials, layers of hBN and the catalytic material may be alternately stacked on top of one another in a reactor.

In practice, hBN and the catalytic material, either as a mixture or individually, are shaped by pressing at a pressure of 1 to 2 tons/cm² (9.8 x 10⁷ Pa to 19.6 x 10⁷ Pa) before packed in a reactor. In this manner, the powder material not only becomes more handleable but also shrinks to a lesser degree in a reactor, thereby improving the productivity of the cBN abrasive grains.

According to the present invention, cBN may be added beforehand to the shaped body or the stack of the catalytic material and hBN so that it can serve as seed crystals or nuclei to promote the growth of crystals of cBN. In such a case, the catalytic material may be coated onto the surface of the cBN seed crystals.

The shaped body of the catalytic material and hBN are packed in a reactor, which in turn is mounted on a known apparatus to generate high heat and high pressure and is maintained under temperature and pressure conditions that thermodynamically favor the stable presence of cBN. This thermodynamically stable region is described by O. Fukunaga (Diamond Relat. Mater., 9 (2000) 7-12) and is in the pressure range of about 4 GPa to about 6 GPa and in the temperature range of about 1400°C to about 1600°C. The reactor is maintained under these conditions for a time period of about 1 second to about 6 hours.

When maintained in the thermodynamically stable region of cBN, hBN is converted to cBN and, as a result, composite lumps typically made of hBN, cBN, catalytic materials and other substances are formed.

In general, the composite lumps produced by the above-described method are crushed and are dissolved in a heated strongly basic solution. The solution is then allowed to cool down and the lumps are washed with acid and are filtered to recover abrasive grains of cubic boron nitride. In the present invention, the ratio of the low-pressure phase boron nitride to cBN in the composite lumps is decreased to 50% by mass or less, preferably to 30% by mass or less, before the dissolving process. The ratio of the low-pressure phase boron nitride to cBN in the composite lumps is preferably made as small as possible.

In the present invention, the ratio of the low-pressure phase boron nitride to cBN in the composite lumps is determined by the following procedures:
(1) Crush composite lumps to an average size of 20 mm or less.
(2) Remove pyrophyllites in the pressure member with a pincette.
(3) Mix 150 g of the crushed powder with 1000 cc water, and boil the mixture for 180 minutes while stirring. In this step, catalysts mainly dissolve in water.
(4) Separate undissolved material. Wash and then dry the material. To 100 g of the material, add 200 g sodium hydroxide and 20 g water. Heat the mixture at 300°C for 60 minutes while stirring. In this step, low-pressure phase boron nitride mainly dissolves in the solution.
(5) Separate undissolved material. After drying, add the material to a mixture of 500 g sulfuric acid and 150 g nitric acid. Heat the mixture for 90 minutes. In this step, graphite mainly dissolves in the solution.
(6) Separate, wash, dry, and then weigh the undissolved material. Since the weighed product consists of cBN and the weight of the low-pressure phase boron nitride is given by the decrease in weight in the dissolving process in step (4), the ratio of the low-pressure phase boron nitride to cBN in the composite lumps can be determined.

Dry ore floatation, and wet ore floatation may be used to decrease the ratio of the low-pressure phase boron nitride to cBN in the composite lumps to 50% by mass or less.

An exemplary dry ore floatation technique makes use of air stream, while wet ore floatation techniques are known which take advantage of bubbles, surface tension, or bulk oil. In the present invention, bubble ore floatation techniques are preferably used.

A typical bubble ore floatation technique is performed as follows:
First, composite lumps are crushed down to an average size of 20 mm or less, preferably to an average size of 5 mm or less. Care must be taken not to crush the composite lumps to excessively small sizes as this may crush cBN. Subsequently, the crushed composite lumps are formed into a slurry in which cBN and the low-pressure phase boron nitride independently coexist to permit separation by ore floatation. To that end, the crushed lumps and water are placed, for example, in a stainless steel vessel along with a disperser operable in an alkaline environment, and the mixture is stirred. In doing so, hot water may be used rather than water or the mixture may be heated during stirring so as to improve separation by ore floatation. Preferably, the hot water has a temperature from 50°C to 110°C. Also, ammonium gas generated during stirring needs to be exhausted to a scrubber or the like to ensure a safe operational environment.

Operators are required to be equipped with proper protective means such as alkali-resistant gloves and goggles to provide the necessary protection against the strongly basic slurry. Furthermore, it is recommended that stirring be terminated once cBN has been separated from the low-pressure phase boron nitride. If stirring is further continued, the slurry tends to become more homogenous and the low-pressure phase boron nitride completely crumbles into fine particles, resulting in the formation of a bulky froth (surfacing bubbles) during the floatation process. As a result, the operability of the slurry is decreased.

Upon formation of the slurry, the stirrer is stopped and the slurry is allowed to settle. This leaves an hBN layer formed on top of the sediment layer. Since this layer contains little cBN, it may be collected in advance with a vacuum hose so that the underlying layer containing some cBN can be first subjected to the ore floatation process.

The bottommost layer, composed mostly of cBN, may be directly subjected to the subsequent alkaline dissolution process.

First, the case in which the low-pressure phase boron nitride is caused to float by the ore floatation process to separate cBN from the low-pressure phase boron nitride will be described.

A collector capable of causing the low-pressure boron nitrides to attach to the bubbles, along with a bubbling agent to facilitate the formation of bubbles, is added to the slurry formed from the composite lumps, and the mixture is stirred. To this end, the concentration of the slurry is adjusted to 30% by mass or less. Concentrations of the slurry higher than 30% by mass can result in insufficient separation of cBN from the low-pressure phase boron nitride.

Also, it is preferable to provide means to prevent generation of eddies, such as a disturbance plate (or stabilizer) in the vessel, since such eddies, if significant, can result in insufficient separation of cBN from the low-pressure phase boron nitride.

Preferably, the collector suitable for use in the present invention is at least one selected from kerosene, coal tar creosote, and sodium oleate, and the bubbling agent is at least one selected from pine oil, camphor, methylisobutyl carbinol (MIBC: (CH₃)₂CHCH₂CH(OH)CH₃), conifer oil, cresylic acid, creosote oil, eucalyptus oil, and flotol oil.

Once the slurry has been thoroughly stirred to cause the collector to adsorb onto the surface of the low-pressure phase boron nitride, bubbles are introduced from below. Bubbles can be formed by any method that can generate the required amount of bubbles of a size suitable for the separation.

Typically, the low-pressure phase boron nitride is first roughly separated by ore floatation when the concentration of the slurry is high (30% by mass or higher), and the remaining slurry with a reduced concentration (10% by mass or lower) is again subjected to ore floatation for further separation. In this manner, hBN attached to the froth can be separated efficiently.

To that end, it is preferred that the separation be repeated in the same vessel or the separation be sequentially performed in an apparatus containing multiple tanks to improve the recovery of cBN.

It is also preferable to add additional collector, bubbling agent, or hot water during the separation process depending on the conditions of the ore floatation.

After the low-pressure phase boron nitride has been separated from the composite lumps by ore floatation, the residual cBN-rich composite material remaining at the bottom of the floatation apparatus is collected and the remaining low-pressure phase boron nitride is subjected to the subsequent dissolving process using reagents such as a strong alkali. Since the present invention makes it possible to significantly reduce the proportion of the low-pressure phase boron nitride present in the composite lumps, the amount of alkaline reagents used in the dissolving process can be significantly reduced.

Alternatively, cBN may be caused to float by the ore floatation process. For example, this is done by the following procedures:

As described above, composite lumps are first crushed down to an average size of 20 mm or less, preferably to an average size of 5 mm or less. The crushed composite lumps are then formed into a slurry in which cBN and the low-pressure phase boron nitride independently coexist to permit separation by ore floatation.

The pH of the slurry is then adjusted to a value of 1 or lower by the addition of an acid, and the slurry is subjected to the ore floatation process. Following the addition of the acid to adjust the pH to 1 or lower and prior to ore floatation, the slurry may be allowed to stand allowing the composite material to settle and the supernatant may be discarded, followed by another addition of an acid to adjust the pH back to 1 or lower. In this manner, the separation by ore floatation can be further improved.

Preferably, the collector to cause cBN to float along with bubbles is at least one selected from fatty acids, resin acids, and alkaline salts thereof, and the bubbling agent is at least one selected from pine oil, camphor, methylisobutyl carbinol (MIBC: (CH₃)₂CHCH₂CH(OH)CH₃), conifer oil, cresylic acid, creosote oil, eucalyptus oil, and flotol oil. Preferably, fatty acid is a fatty acid with 12 to 20 carbon atoms, including lauric acid, myristic acid, palmitic acid, stearic acid, oleic acid, linoleic acid, and linolenic acid.

The slurry obtained after ore floatation according to the present invention can be subjected to an ordinary alkaline dissolving process to recover cBN. Specifically, sodium hydroxide, along with a small amount of water, is added to the slurry resulting after ore floatation. The mixture is then heated to about 300°C to selectively dissolve the low-pressure phase boron nitride and the like. After cooling, the mixture is washed with an acid and then with water, and is filtered to isolate cBN.

### Examples:

The present invention will now be described in detail with reference to the following examples, which are not intended to limit the scope of the invention in any way. Example 1:

To 100 parts by mass of hBN (UHP-1 manufactured by SHOWA DENKO K.K; average particle size = 8 to 10 µm; purity = 98%), 15 parts by mass of LiCaBN₂, a catalyst needed for cBN synthesis, and 0.5 parts by mass of cBN grains to serve as seed crystals were added and the mixture was shaped to yield a sample. The shaped sample had a density of 1.92 g/cm³. The shaped sample was packed in a reactor, which in turn was loaded onto an apparatus to generate high heat and high pressure, and the sample was maintained at 5 Gpa at 1500°C for 15 minutes to carry out the synthesis. Upon completion of the synthesis, the resulting composite lumps were taken out from the apparatus and were crushed down to an average particle size of 5 mm.

The composition of the crushed mixture was as follows: 40% by mass of hBN; 41 % by mass of cBN; 15% by mass of catalysts; and 4% by mass of graphite and pyrophyllite. The ratio of the mass of the low-pressure phase boron nitride to the mass of cBN was 98%.

To 15 kg of the crushed grains, 1 L of a solution of a disperser (poiz 530 manufactured by KAO Co., Ltd.), diluted 3-fold with water, was added along with hot water to give a final volume of 60 L. While being maintained at about 90°C, the mixture was stirred for 900 minutes to form a slurry.

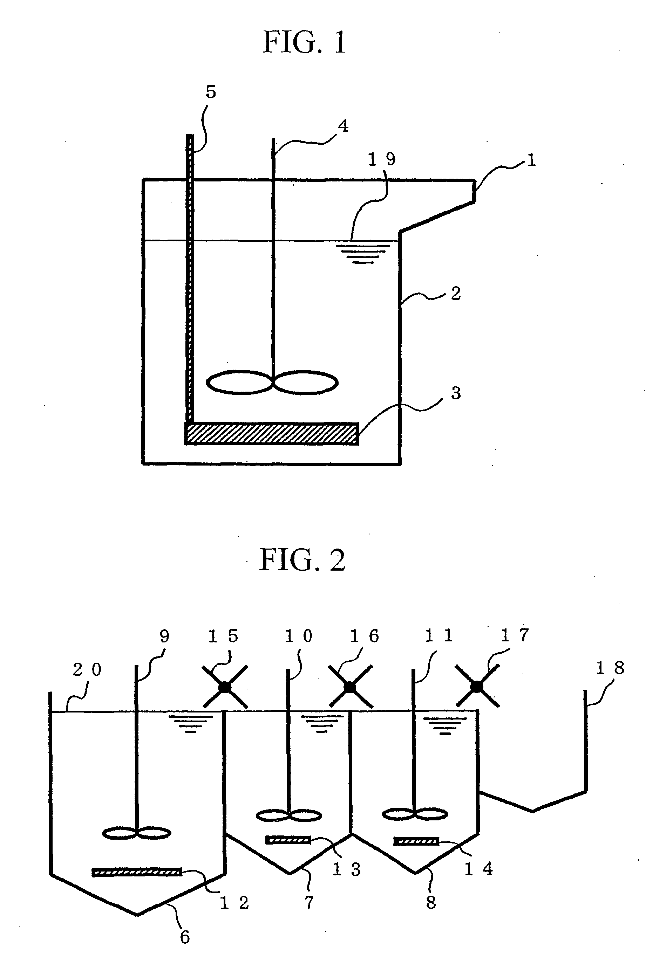

The resulting slurry was subjected to the ore floatation process. The ore floatation apparatus used is schematically depicted in Fig. 1. The ore floatation apparatus includes a stainless steel vessel 2, which is 60 cm high and 47 cm in inner diameter, has an effective volume of 70 L, and includes a beak 1. Arranged at the bottom of the vessel 2 are a pair of air diffuser pipes 3 (Model M-58, DAICEN MEMBRANE SYSTEMS Co., LTD.) for generating air bubbles. The pair of diffuser pipes 3 are made from polymethylmethacrylate and include holes with a diameter of 50 µm. A 100 W variable stirrer 4 is also placed in the vessel 2. The pair of air diffuser pipes 3 are connected via a pipe 5 to a 110 W pump so that the pipes 3 can each send air at a gauge pressure of 3 kgf/cm² (relative pressure = 2.94x10⁵ Pa) and at a flow rate of 70 L/min.

The slurry had a pH of 11. 4g of sodium oleate were added to the slurry and the mixture was stirred for 5 minutes. This was followed sequentially by the addition of 200 ml of kerosene, stirring for another 5 minutes, addition of another 4 g of sodium oleate, and stirring for another 5 minutes. Subsequently, air was sent into the mixture for about 1 hour to carry out ore floatation.

The floated froth (materials attached to bubbles and floated to the surface) weighed 4.7 kg, which consisted of 4.4 kg of hBN, 0.15 kg of cBN, and 0.15 kg of graphite and pyrophyllite.

The cBN-rich, residual tails (residual portion that did not attach to bubbles and remained in the vessel) remaining at the bottom of the vessel weighed 8.1 kg, which consisted of 1.6 kg hBN, 6.0 kg cBN, and 0.5 kg of graphite and pyrophyllite.

The proportion of the low-pressure phase boron nitride in the tails was 26% by mass with respect to the mass of cBN. Subsequently, 4 kg sodium hydroxide and 0.4 L water were added to the tails and the mixture was heated to 300°C in a stainless steel vessel, which was followed by decantation with water 5 times. As a result, cBN completely free of hBN was collected.

In contrast to the conventional method which requires as much as 10 kg of sodium hydroxide in the alkaline dissolving process, the residual hBN can be decomposed, in accordance with the ore floatation process of the present invention, by using only 4 kg of sodium hydroxide, which is less than half as much as is required by the conventional process. Since the amount of residual hBN is reduced, less ammonium gas is emitted upon decomposition of hBN, and the solution of sodium hydroxide is kept from boiling over during the reaction. Not only does this allow more materials to be placed in the reactor, thereby leading to an increased productivity, but it also permits recycling of hBN separated by ore floatation.

### Example 2:

52 kg of a mixture, produced in the same manner as in Example 1 and crushed down to 5 mm or less in size (composed of 40% by mass of hBN, 41% by mass of cBN, 4% by mass of graphite and pyrophyllite, and 15% by mass of catalysts; the ratio of the mass of the low-pressure phase boron nitride to that of cBN is 98% by mass), was placed in a 200 L stainless steel vessel. 150 L hot water, along with 2 L of a solution of a disperser (poiz 530 manufactured by KAO Co., Ltd.), diluted 3-fold with water, was added to the mixture. While being maintained at about 90°C, the mixture was stirred for 900 minutes to form a slurry.

Subsequently, stirring was stopped and the slurry was allowed to settle. This left an hBN layer on top of the sediments. Since this layer contained little cBN, it was collected in advance with a vacuum hose and the underlying cBN-rich fraction was subjected to ore floatation.

The fraction separated using the vacuum hose weighed 7.3 kg, which consisted of 6.8 kg hBN and 0.5 kg of graphite and pyrophyllite.

The remaining fraction excluding the bottommost layer composed mainly of cBN was loaded onto an ore floatation apparatus that included three individual ore floatation reservoirs. The ratio of the mass of low-pressure phase boron nitride to that of cBN in the slurry subjected to the ore floatation process was 95% by mass. The ore floatation apparatus used is schematically depicted in Fig. 2.

Specifically, the slurry was first transferred to a first ore floatation reservoir 6. 200 mL of kerosene to serve as a collector and 20 mL of MIBC to serve as a bubbling agent were added to the slurry and the mixture was stirred with a stirrer 9 for 5 minutes. Subsequently, bubbles were introduced by an air diffuser pipe 12 placed at the bottom of the reservoir to begin ore floatation. The resulting hBN-rich froth floating in the first ore floatation reservoir 6 was then transferred to a second ore floatation reservoir 7 by means of a rotary paddle 15 for the secondary ore floatation to collect cBN present in the froth. Similarly, the resulting froth was transferred to a third ore floatation reservoir 8 where it was subjected to further ore floatation to separate cBN present in the froth.

The froth weighed 10 kg, which consisted of 8.9 kg hBN, 0.04 kg cBN, and 1.06 kg graphite and pyrophyllite. The tail fractions collected from the bottom of the vessel used to form the slurry and from the bottoms of the three reservoirs for ore floatation together consisted of 21.1 kg cBN, 4.9 kg hBN, and 0.96 kg of graphite and pyrophyllite, with the ratio of the mass of low-pressure boron nitrides to that of cBN being 23% by mass.

Sodium hydroxide and a small amount of water were added to the tail fraction, and the mixture was heated to about 300°C and was then subjected to decantation with water 5 times. As a result, the residual hBN was completely removed. The method of the present invention made it possible to reduce the required amount of sodium hydroxide from 75 kg in the conventional technique down to 50 kg. Furthermore, dissolved sodium hydroxide was prevented from boiling over upon heating, ensuring the safety of the process.

### Example 3:

Composite lumps resulting from defective synthesis were crushed, and the composition of the crushed grains was determined as follows: 73% by mass of hBN; 4% by mass of cBN; 14% by mass of catalyst; and 9% by mass of graphite and pyrophyllite. The ratio of the mass of low-pressure phase boron nitride to that of cBN turned out to be 1825% by mass.

To 10 kg of the crushed product, 1 L of a solution of a disperser (poiz 530 manufactured by KAO Co., Ltd.) diluted 3-fold with water was added along with hot water to give a final volume of 60 L. The mixture was formed into a slurry in the same manner as in Example 1.

Prior to the ore floatation process, hydrochloric acid was added to the slurry to adjust the pH to a value of 1. This was followed by decantation with water 5 times and another addition of hydrochloric acid to adjust the pH to 1.

The slurry was then subjected to the ore floatation process using the ore floatation apparatus shown in Fig. 1. The slurry was placed in the vessel 2, followed by the addition of 3 g sodium dodecyl sulfate and a 5-minute stirring by the stirrer 4. Air was then introduced by the air diffuser pipes 3. Several minutes of bubbling caused most of cBN to float to the surface. The floating cBN was collected by a net. In this way, as much as 98% by mass of the cBN content was recovered. The ratio of the mass of the low-pressure phase boron nitride to that of cBN in the recovered product was 0.5% by mass.

### Industrial Applicability

The method for producing cubic boron nitride in accordance with the present invention facilitates the operation in separating cBN from cBN-containing composite lumps by a high-pressure technique and permits the production of cBN at a reduced cost. In particular, the method of the present invention permits a significant reduction in the amount of strongly basic reagents required by the process, thereby reducing operational risks and the amount of labor required in the neutralizing process. The method of the present invention also permits recycling of the low-pressure phase boron nitride remaining in the composite lumps.

## Claims

1. A method for producing cubic boron nitride, in which a mixture containing hexagonal boron nitride and a catalyst is maintained under a pressure in the range of 4 GPa to 6 GPa and a temperature in the range of 1400 °C to 1600°C, thereby forming composite lumps containing cubic boron nitride, which in turn are dissolved in an alkaline solution to recover cubic boron nitride, the method comprising the step of
decreasing the ratio of low-pressure phase boron nitride to cubic boron nitride in the composite lumps by an ore floatation process down to 50% by mass or less prior to dissolving the composite lumps in the alkaline solution.

2. The method for producing cubic boron nitride according to claim 1, wherein the ratio of low-pressure phase boron nitride to cubic boron nitride in the composite lumps is reduced to 30% by mass or less.

3. The method for producing cubic boron nitride according to claim 1 or 2, further comprising the step of crushing the composite lumps down to an average particle size of 20 mm or less prior to the ore floatation process.

4. The method for producing cubic boron nitride according to claim 1 or 2, further comprising the step of crushing the composite lumps down to an average particle size of 5 mm or less prior to the ore floatation process.

5. The method for producing cubic boron nitride according to claim 1 or 2, further comprising the steps of:
crushing the composite lumps;
adding an ore floatation agent to a resulting crushed product of the composite lumps along with water; and
stirring the resulting mixture prior to the ore floatation process.

6. The method for producing cubic boron nitride according to claim 3 or 4, further comprising the steps of:
adding an ore floatation agent to a crushed product of the composite lumps along with water, and
stirring the resulting mixture prior to the ore floatation process.

7. The method for producing cubic boron nitride according to claim 5 or 6, wherein the water is hot water having a temperature from 50 to 110 °C.

8. The method for producing cubic boron nitride according to any one of claims 5 to 7, wherein
the ore floatation agent comprises at least one substance selected from the group consisting of kerosene, coal tar creosote, and sodium oleate, and at least one substance selected from the group consisting of pine oil, camphor, methylisobutyl carbinol (MIBC), conifer oil, cresylic acid, creosote oil, eucalyptus oil, and flotol oil.

9. The method for producing cubic boron nitride according to any one of claims 5 to 7, further comprising the steps of:
dissolving the composite lumps in a solvent to form a slurry prior to the ore floatation process;
adding an acid to the slurry to adjust the pH of the slurry to 1 or lower, and
subsequently adding the ore floatation agent to carry out the ore floatation process, the ore floatation agent comprising at least one substance selected from the group consisting of fatty acids, resin acids, and alkaline salts thereof, and at least one substance selected from the group consisting of pine oil, camphor, methylisobutyl carbinol (MIBC), conifer oil, cresylic acid, creosote oil, eucalyptus oil, and flotol oil.

10. The method for producing cubic boron nitride according to claim 9, wherein water is used as the solvent for forming the composite lumps into the slurry.

11. The method for producing cubic boron nitride according to claim 9 or 10, wherein hot water having a temperature from 50 to 110 °C is used as the solvent for forming the composite lumps into the slurry.

12. The method for producing cubic boron nitride according to any one of claims 9 to 11, further comprising the steps of:
subsequent to the addition of the acid to adjust the pH of the slurry to 1 or lower, allowing the slurry to stand causing a composite material to settle and removing the supernatant;
making another addition of acid to adjust the pH of the slurry to 1 or lower, and
subsequently carrying out the ore floatation process.

## Patentansprüche

1. Verfahren zur Herstellung von kubischem Bornitrid, bei dem ein Gemisch, welches hexagonales Bornitrid und einen Katalysator enthält, unter einem Druck im Bereich von 4 GPa bis 6 GPa und bei einer Temperatur im Bereich von 1400 °C bis 1600 °C gehalten wird, wobei Verbundstücke gebildet werden, welche kubisches Bornitrid enthalten, welche wiederum zur Rückgewinnung von kubischem Bornitrid in einer alkalischen Lösung gelöst werden, wobei das Verfahren den Schritt beinhaltet:
Verminderung des Verhältnis von Niedrigdruckphasenbornitrid zu kubischem Bornitrid in den Verbundstücken mittels eines Erzflotationsverfahrens bis auf 50 Massen-% oder weniger vor Lösen der Verbundstücke in der alkalischen Lösung.

2. Verfahren zur Herstellung von kubischem Bornitrid nach Anspruch 1, wobei das Verhältnis von Niedrigdruckphasenbornitrid zu kubischem Bornitrid in den Verbundstücken auf 30 Massen-% oder weniger vermindert wird.

3. Verfahren zur Herstellung von kubischem Bornitrid nach Anspruch 1 oder 2, weiterhin mit dem Schritt des Zerkleinerns der Verbundstücke herunter bis auf eine durchschnittliche Teilchengröße von 20 mm oder weniger vor dem Erzflotationsverfahren.

4. Verfahren zur Herstellung von kubischem Bornitrid nach Anspruch 1 oder 2, weiterhin mit dem Schritt des Zerkleinerns der Verbundstücke herunter bis auf eine durchschnittliche Teilchengröße von 5 mm oder weniger vor dem Erzflotationsverfahren.

5. Verfahren zur Herstellung von kubischem Bornitrid nach Anspruch 1 oder 2, welches weiterhin den Schritt beinhaltet:
Zerkleinern der Verbundstücke;
Zugabe eines Erzflotationsmittels zu einem resultierenden zerkleinerten Produkt der Verbundstücke zusammen mit Wasser; und
Rühren des resultierenden Gemischs vor dem Erzflotationsverfahren.

6. Verfahren zur Herstellung von kubischem Bornitrid nach Anspruch 3 oder 4, weiterhin mit den Schritten:
Zugabe eines Erzflotationsmittels zu einem zerkleinerten Produkt der Verbundstücke zusammen mit Wasser; und
Rühren des resultierenden Gemischs vor dem Erzflotationsverfahren.

7. Verfahren zur Herstellung von kubischem Bornitrid nach Anspruch 5 oder 6, wobei das Wasser heißes Wasser mit einer Temperatur von 50 bis 110 °C ist.

8. Verfahren zur Herstellung von kubischem Bornitrid nach einem der Ansprüche 5 bis 7, wobei
das Erzflotationsmittel mindestens eine Substanz enthält, ausgewählt aus der Gruppe, bestehend aus Kerosin, Steinkohlenteercreosot und Natriumoleat, und mindestens eine Substanz, ausgewählt aus der Gruppe, bestehend aus Kiefernöl, Campher, Methylisobutylcarbinol (MIBC), Koniferenöl, Cresylsäure, Creosotöl, Eukalyptusöl und Flotolöl.

9. Verfahren zur Herstellung von kubischem Bornitrid nach einem der Ansprüche 5 bis 7, weiterhin mit den Schritten:
Lösen der Verbundstücke in einem Lösungsmittel, um eine Aufschlämmung zu bilden, vor dem Erzflotationsverfahren;
Zugabe einer Säure zu der Aufschlämmung, um den pH der Aufschlämmung auf 1 oder niedriger einzustellen, und
anschließend Zugabe des Erzflotationsmittels, um das Erzflotationsverfahren durchzuführen, wobei das Erzflotationsmittel mindestens eine Substanz enthält, ausgewählt aus der Gruppe, bestehend aus Fettsäuren, Harzsäuren und alkalischen Salzen davon, sowie mindestens eine Substanz, ausgewählt aus der Gruppe, bestehend aus Kiefernöl, Campher, Methylisobutylcarbinol (MIBC), Koniferenöl, Cresylsäure, Creosotöl, Eukalyptusöl und Flotolöl.

10. Verfahren zur Herstellung von kubischem Bornitrid nach Anspruch 9, wobei Wasser als das Lösungsmittel zur Bildung der Verbundstücke in der Aufschlämmung verwendet wird.

11. Verfahren zur Herstellung von kubischem Bornitrid nach Anspruch 9 oder 10, wobei heißes Wasser mit einer Temperatur von 50 bis 110 °C als das Lösungsmittel zur Bildung der Verbundstücke in der Aufschlämmung verwendet wird.

12. Verfahren zur Herstellung von kubischem Bornitrid nach einem der Ansprüche 9 bis 11, weiterhin mit den Schritten:
im Anschluss an die Zugabe der Säure, um den pH der Aufschlämmung auf 1 oder niedriger einzustellen, Stehenlassen der Aufschlämmung, wodurch sich ein Verbundmaterial absetzt, und Entfernen des Überstandes;
Vornehmen einer weiteren Zugabe von Säure, um den pH der Aufschlämmung auf 1 oder niedriger einzustellen, und
anschließend Durchführen des Erzflotationsverfahrens.

## Revendications

1. Procédé de production de nitrure de bore cubique, dans lequel un mélange contenant du nitrure de bore hexagonal et un catalyseur est maintenu à une pression comprise dans la plage allant de 4 GPa à 6 GPa et à une température comprise dans la plage allant de 1400 °C à 1600 °C, formant des morceaux composites contenant du nitrure de bore cubique, qui à leur tour sont dissous dans une solution alcaline pour récupérer le nitrure de bore cubique, le procédé comprenant les étapes consistant à
réduire le rapport du nitrure de bore en phase de basse pression au nitrure de bore cubique dans les morceaux composites par un procédé de flottation de minerai jusqu'à 50 % en poids ou moins avant de dissoudre les morceaux composites dans la solution alcaline.

2. Procédé de production d'un nitrure de bore cubique selon la revendication 1, dans lequel le rapport du nitrure de bore en phase de basse pression au nitrure de bore cubique dans les morceaux composites est réduit à 30 % en poids ou moins.

3. Procédé de production d'un nitrure de bore cubique selon la revendication 1 ou 2, comprenant en outre l'étape consistant à broyer les morceaux composites en une taille de particule moyenne inférieure ou égale à 20 mm avant le procédé de flottation de minerai.

4. Procédé de production d'un nitrure de bore cubique selon la revendication 1 ou 2, comprenant en outre l'étape consistant à broyer les morceaux composites en une taille de particule moyenne inférieure ou égale à 5 mm avant le procédé de flottation de minerai.

5. Procédé de production d'un nitrure de bore cubique selon la revendication 1 ou 2, comprenant en outre les étapes consistant à :
broyer les morceaux composites ;
ajouter un agent de flottation de minerai à un produit broyé résultant des morceaux composites ainsi que de l'eau ; et
agiter le mélange résultant avant le procédé de flottation de minerai.

6. Procédé de production d'un nitrure de bore cubique selon la revendication 3 ou 4, comprenant en outre les étapes consistant à :
ajouter un agent de flottation de minerai à un produit broyé des morceaux composites ainsi que de l'eau ; et
agiter le mélange résultant avant le procédé de flottation de minerai.

7. Procédé de production d'un nitrure de bore cubique selon la revendication 5 ou 6, dans lequel l'eau est de l'eau chaude ayant une température de 50 à 110 °C.

8. Procédé de production d'un nitrure de bore cubique selon l'une quelconque des revendications 5 à 7, dans lequel
l'agent de flottation de minerai comprend au moins une substance choisie dans le groupe constitué par le kérosène, la créosote de houille et l'oléate de sodium, et au moins une substance choisie dans le groupe constitué par l'huile de pin, le camphre, le méthylisobutylcarbinol (MIBC), l'huile de conifère, l'acide crésylique, l'huile de créosote, l'huile d'eucalyptus et l'huile flotol.

9. Procédé de production d'un nitrure de bore cubique selon l'une quelconque des revendications 5 à 7, comprenant en outre les étapes consistant à :
dissoudre les morceaux composites dans un solvant pour former une suspension avant le procédé de flottation de minerai ;
ajouter un acide à la suspension pour ajuster le pH de la suspension à une valeur inférieure ou égale à 1, et
ajouter ensuite l'agent de flottation de minerai pour réaliser le procédé de flottation de minerai, l'agent de flottation de minerai comprenant au moins une substance choisie dans le groupe constitué par les acides gras, les acides résiniques, et leurs sels alcalins, et au moins une substance choisie dans le groupe constitué par l'huile de pin, le camphre, le méthylisobutylcarbinol (MIBC), l'huile de conifère, l'acide crésylique, l'huile de créosote, l'huile d'eucalyptus et l'huile flotol.

10. Procédé de production de nitrure de bore cubique selon la revendication 9, dans lequel de l'eau est utilisée en tant que solvant pour la formation des morceaux composites dans la suspension.

11. Procédé de production de nitrure de bore cubique selon la revendication 9 ou 10, dans lequel de l'eau chaude ayant une température de 50 à 110 °C est utilisée en tant que solvant pour la formation des morceaux composites dans la suspension.

12. Procédé de production de nitrure de bore cubique selon l'une quelconque des revendications 9 à 11, comprenant en outre les étapes consistant à :
après avoir ajouté de l'acide pour ajuster le pH de la suspension à une valeur inférieure ou égale à 1, laisser reposer la suspension pour permettre la décantation d'une matière composite et éliminer le surnageant ;
réaliser un autre ajout d'acide pour ajuster le pH de la suspension à une valeur inférieure ou égale à 1, et
réaliser ensuite le procédé de flottation de minerai.
